# DEMANDE DE BREVET EUROPEEN

(11) **EP 3 588 386 A1**
(43) Date de publication de la demande: **01.01.2020**
(21) Numéro de dépôt: 19181199.1
(22) Date de dépôt: 19.06.2019
(51) Int. Cl.: G06N 3/02, G08G 5/00

(54) **PLATE-FORME D'ENTRAÎNEMENT ET/OU D'ASSISTANCE AU CONTRÔLE AÉRIEN VIA UN SYSTÈME ÉLECTRONIQUE DE CONTRÔLE DU TRAFIC AÉRIEN, PROCÉDÉ ASSOCIÉ**

(30) Priorité: 21.06.2018 FR 1800638
(71) Demandeur: Thales, 92400 Courbevoie (FR)
(72) Inventeur: PESQUET, Béatrice, 94628 RUNGIS (FR); KAAKAI, Fateh, 94628 RUNGIS (FR); BEESTON, Warren, 94628 RUNGIS (FR)
(74) Mandataire: Lavoix

(57) **Abrégé**

Plate-forme (1) d'entraînement et/ou d'assistance au contrôle aérien comprenant :
- un système électronique (2) de contrôle du trafic aérien, adapté pour obtenir des données d'entrée représentatives du trafic aérien, pour délivrer, à destination d'un contrôleur aérien, des informations établies en fonction desdites données d'entrée obtenues, et pour recevoir depuis le contrôleur aérien, des instructions ;
- un bloc (14) de détermination automatique d'instructions en fonction de données d'entrée représentatives d'au moins l'état d'un trafic aérien ;
- un module électronique de traitement (13) adapté pour collecter lesdites données d'entrée obtenues par le système électronique de contrôle de trafic aérien, pour les fournir au bloc (14) de détermination automatique, pour collecter au moins une instruction déterminée automatiquement en fonction desdites données d'entrée fournies et pour commander la délivrance de ladite instruction au contrôleur aérien opérant le système ;
dans laquelle ledit bloc comprend un réseau de neurones issu d'un apprentissage sur un historique de données d'entrée obtenues par un système électronique de contrôle du trafic aérien et d'instruction(s) de contrôle de trafic aérien reçues reçue(s) par ledit système.

## Description

La présente invention concerne le domaine des systèmes électroniques de contrôle du trafic aérien, typiquement les systèmes électroniques dits ATM, de l'anglais « Air Traffic Management ». Un tel système assure l'interfaçage entre d'une part un contrôleur aérien, par exemple en charge d'un secteur géographique donné, et d'autre part les aéronefs situés au sein du secteur géographique ou d'autres contrôleurs aériens, notamment ceux en charge des secteurs géographiques voisins.

Un tel système reçoit des données de systèmes externes (données météorologiques, plans de vol d'aéronef, détection de radars, messages de contrôleurs aériens de secteurs voisins etc.), traite ces données, éventuellement les combine entre elles etc., puis restitue, via une IHM (interface homme-machine), au contrôleur aérien ces données ou les informations issues des traitements. Le contrôleur aérien, en fonction de ces données et informations, détermine des instructions (des commandes destinées aux aéronefs, des messages aux contrôleurs voisins comprenant des informations données, des commandes d'exécution de fonctions supplémentaires du système etc.) et les saisit via l'IHM. Le système traite ensuite ces commandes.

Actuellement, aucune solution n'est offerte permettant de faire bénéficier les contrôleurs aériens de l'expérience acquise au fil du temps dans le domaine du contrôle aérien, que ce soit en contexte d'entraînement ou lors des situations opérationnelles de contrôle aérien.

Par exemple, l'entraînement des contrôleurs aériens est effectué par des programmes de test présentant un certain nombre d'inconvénients : ils proposent un nombre très limité de scénarios, sont peu évolutifs et peinent donc à être représentatifs des évolutions des systèmes de contrôle aérien.

A cet effet, suivant un premier aspect, l'invention propose une plate-forme d'entraînement et/ou d'assistance au contrôle aérien via un système électronique de contrôle du trafic aérien, ladite plate-forme d'entraînement comprenant :
- ledit système électronique de contrôle du trafic aérien, adapté pour obtenir des données d'entrée représentatives au moins de l'état d'un trafic aérien, pour délivrer, à destination du contrôleur aérien opérant le système, des informations relatives au trafic aérien et établies en fonction au moins desdites données d'entrée obtenues, pour recevoir depuis un contrôleur aérien, des instructions en fonction desdites informations délivrées et pour traiter lesdites instructions ;
- un bloc de détermination automatique d'instructions en fonction de données d'entrée représentatives d'au moins l'état d'un trafic aérien ;
- un module électronique de traitement adapté pour collecter lesdites données d'entrée obtenues par le système électronique de contrôle de trafic aérien, pour les fournir au bloc de détermination automatique, pour collecter au moins une instruction déterminée automatiquement en fonction desdites données d'entrée fournies et pour commander la délivrance de ladite instruction au contrôleur aérien opérant le système ;
et ledit bloc comprend un réseau de neurones issu d'un apprentissage mis en oeuvre par ordinateur, en fonction d'ensembles d'éléments d'un premier historique d'ensembles d'éléments, chaque ensemble d'éléments étant associé à une situation aérienne respective correspondant à un instant respectif parmi une pluralité d'instants respectifs dans l'historique et comprenant au moins des données d'entrée obtenues par un système électronique de contrôle du trafic aérien à l'instant respectif et la ou les instruction(s) de contrôle de trafic aérien reçues reçue(s) par ledit système consécutivement à la délivrance d'informations établies en fonction desdites données d'entrée.

L'invention permet ainsi de fournir une plate-forme d'entraînement et/ou d'assistance au contrôle aérien fiable, représentative et tirant partie des situations réelles et de leur variété, et évolutive.

Dans des modes de réalisation, la plate-forme d'entraînement et/ou d'assistance au contrôle aérien suivant l'invention comporte en outre une ou plusieurs des caractéristiques suivantes :
- la plate-forme comprend une mémoire adaptée pour stocker un second historique d'ensembles d'éléments, et le module de traitement est adapté pour extraire des données d'entrée de ladite base de données, pour déterminer, en fonction d'au moins de données d'entrée extraites, des données d'entrée d'entraînement et pour fournir lesdites données d'entraînement au système électronique de contrôle du trafic aérien et au bloc de détermination automatique; ledit système électronique de contrôle du trafic aérien étant adapté pour délivrer des informations relatives au trafic aérien établies en fonction desdites données d'entrée d'entraînement, pour recevoir depuis un contrôleur aérien en entraînement sur la plate-forme, au moins une instruction de contrôle de trafic aérien établie en fonction desdites informations délivrées et pour la fournir au module de traitement ; ledit module de traitement étant adapté pour comparer ladite instruction reçue avec l'instruction déterminée automatiquement collectée et pour déterminer un message en fonction de ladite comparaison, ladite plate-forme étant adaptée pour afficher le message ;
- le module de traitement est adapté pour déterminer, en fonction de l'instruction déterminée automatiquement par le modèle algorithmique, un message destiné à guider le contrôleur aérien en entraînement vers ladite instruction, la plate-forme étant adaptée pour afficher ledit message ;
- le module de traitement est adapté pour recevoir des informations indiquant un thème d'entraînement et pour extraire les données d'entrée en fonction desdites informations.

Suivant un deuxième aspect, la présente invention propose un procédé d'entraînement et/ou d'assistance au contrôle aérien par un système électronique de contrôle du trafic aérien adapté pour obtenir des données d'entrée représentatives au moins de l'état d'un trafic aérien, pour délivrer, à destination du contrôleur aérien opérant le système, des informations relatives au trafic aérien et établies en fonction au moins desdites données d'entrée obtenues, pour recevoir depuis un contrôleur aérien, des instructions en fonction desdites informations délivrées et pour traiter lesdites instructions, ledit procédé étant mis en oeuvre sur une plate-forme d'entraînement et/ou d'assistance comprenant :
- ledit système électronique;
- un bloc de détermination automatique d'instructions en fonction de données d'entrée représentatives d'au moins l'état d'un trafic aérien issu, ledit bloc comprenant un réseau de neurones issu d'un apprentissage mis en oeuvre par ordinateur, en fonction d'ensembles d'éléments d'un premier historique d'ensembles d'éléments, chaque ensemble d'éléments étant associé à une situation aérienne respective correspondant à un instant respectif parmi une pluralité d'instants respectifs dans l'historique et comprenant au moins des données d'entrée obtenues par un système électronique de contrôle du trafic aérien à l'instant respectif et la ou les instruction(s) de contrôle de trafic aérien reçue(s) par ledit système consécutivement à la délivrance d'informations établies en fonction desdites données d'entrée ;
- un module électronique de traitement ;
   ledit procédé comprenant les étapes consistant à :
   - obtention de données d'entrée par le système électronique de contrôle de trafic aérien ;
   - par le module de traitement : collecte desdites données d'entrée et fourniture desdites données d'entrée collectées au bloc de détermination automatique ;
   - détermination automatique par ledit bloc de détermination automatique en fonction desdites données d'entrée fournies d'au moins une instruction ;
   - commande par le module de traitement de la délivrance de ladite instruction au contrôleur aérien opérant le système.

Dans des modes de réalisation, le procédé d'entraînement et/ou d'assistance au contrôle aérien suivant l'invention comporte en outre une ou plusieurs des caractéristiques suivantes :
- la plate-forme comprend une mémoire adaptée pour stocker un second historique d'ensembles d'éléments, ledit procédé comprenant les étapes de :
   - par le module de traitement : extraction des donnée d'entrée de ladite base de données, détermination, en fonction d'au moins les données d'entrée extraites, des données d'entrée d'entraînement et fourniture desdites données d'entraînement au système électronique de contrôle du trafic aérien et au bloc de détermination automatique ;
   - par ledit système électronique de contrôle du trafic aérien : délivrance des informations relatives au trafic aérien établies en fonction desdites données d'entrée d'entraînement, réception depuis un contrôleur aérien en entraînement sur la plate-forme, d'au moins une instruction de contrôle de trafic aérien établie en fonction desdites informations délivrées et fourniture au module de traitement ;
   - comparaison par le module de traitement de ladite instruction reçue avec l'instruction déterminée automatiquement collectée et détermination d'un message en fonction de ladite comparaison ;
   - affichage par ladite plate-forme du message ;
- le procédé comprend la détermination par le module de traitement, en fonction de l'instruction déterminée automatiquement par le modèle algorithmique, d'un message destiné à guider le contrôleur aérien en entraînement vers ladite instruction, et l'affichage du message par la plate-forme ;
- le procédé comprend les étapes, réalisées par le module de traitement, de :
   - réception d'informations indiquant un thème d'entraînement et
   - extraction des données d'entrée en fonction desdites informations.

Ces caractéristiques et avantages de l'invention apparaîtront à la lecture de la description qui va suivre, donnée uniquement à titre d'exemple, et faite en référence aux dessins annexés, sur lesquels :
- la figure 1 représente une vue d'un système électronique de contrôle du trafic aérien considéré dans un mode de réalisation de l'invention ;
- la figure 2 représente une vue d'une plate-forme d'entraînement dans un mode de réalisation de l'invention ;
- la figure 3 est un organigramme d'étapes mises en oeuvre dans un mode de réalisation de l'invention ;
- la figure 4 est un organigramme d'étapes mises en oeuvre dans un mode de réalisation de l'invention.

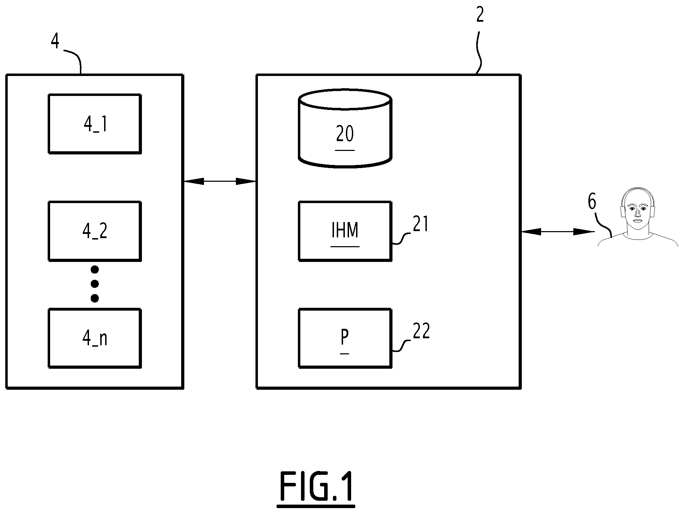

La figure 1 représente un système électronique de contrôle du trafic aérien 2, nommé système ATM 2, relié par des liaisons de télécommunications à un ensemble 4 de systèmes extérieurs 4_1, 4_2, ..., 4_n.

Le système ATM 2 comprend une mémoire 20, un bloc IHM 21 et un processeur 22.

Le bloc IHM 21 comprend par exemple des écrans d'affichage, tactiles ou non, un système de haut-parleur, un clavier, un microphone ...

Les systèmes extérieurs 4_1, 4_2, ..., 4_n comprennent par exemple, des aéronefs, des radars, des stations météorologiques, des dispositifs de télécommunication d'autres contrôleurs aériens, des salles de contrôle d'aéroport ...

Le système ATM 2 est adapté pour recevoir, et stocker dans sa mémoire 20, des données d'entrée (et l'estampillage temporel de ces données).

Ces données d'entrée comprennent des données externes, i.e. qui lui sont délivrées par les systèmes extérieurs 4_1, 4_2, ..., 4_n de l'ensemble 4 ; ces données externes représentent l'état courant ou à venir de l'espace aérien (ou d'un secteur donné de l'espace aérien) comprenant par exemple, de façon non exhaustive :
- pour chaque aéronef couramment ou sous peu dans le secteur : coordonnées en 3 dimensions (3D), type d'aéronef, son cap, sa vitesse, son plan de vol ;
- informations météorologiques courantes et à venir ;
- indices de densité du trafic aérien (tels que nombre d'avions dans le secteur, turbulences), données définissant la structure courante, et à venir, de l'espace aérien (telles que la présence de zones d'interdiction militaires, de couloirs aériens), configuration, courante et à venir, de l'aéroport (pistes ouvertes, direction des vents, voies de taxi disponibles...), données de surveillance (telles qu'issues de radars primaires et secondaires, données ADS-B, WAM, ...) ;
- messages de coordination avec des contrôleurs aériens opérant sur des systèmes ATM relatifs à des secteurs adjacents.

Le système ATM 2 est en outre adapté pour restituer ces données au contrôleur aérien, via le bloc IHM 21.

Les données externes peuvent être en outre traitées (par exemple moyennées, vérifiées, combinées entre elles, analysées, etc.) avant restitution.

Les données d'entrée comportent également ces données traitées et leur estampillage temporel.

Le système ATM 2 est en outre adapté pour générer des données internes au système ATM 2, représentatives de son état courant. Elles sont générées notamment à l'aide de sondes installées dans le système ATM 2 et comprennent, par exemple, de façon non exhaustive :
- une file d'attente de messages, des données partagées, des logs, des traces techniques, une action de focalisation sur une étiquette de vol, facteur d'agrandissement ou de dézoomage sur une zone donnée, transcription de conversation vocale entre un contrôleur et un pilote d'aéronef, etc.

Les données internes sont accessibles à un contrôleur aérien en service opérationnel opérant le système ATM 2 via l'IHM 21. Dans un mode de réalisation, les données d'entrée stockées dans la mémoire 20 comportent également ces données internes, avec l'estampillage temporel correspondant audites données.

Dans un mode de réalisation, le système ATM 2 est adapté pour mettre en oeuvre des fonctions simples (telles que zoomer ou dé-zoomer sur une zone choisie par le contrôleur aérien) et des fonctions plus évoluées utilisant les données externes et générant des données internes. Ces fonctions sont mises en oeuvre par exemple à l'aide de programmes d'ordinateur implémentant la fonction, qui sont stockés dans la mémoire 20 et exécutées sur le processeur 22. Les fonctions évoluées comprennent par exemple la détection de conflits, identifiant un risque de collision entre un aéronef et un autre aéronef, ou un risque de pénétration d'un aéronef dans une zone pendant une période d'interdiction de vol dans la zone etc., ou la détermination d'une solution permettant de résoudre le conflit. Les résultats de ces fonctions sont restitués via l'IHM 21, au contrôleur aérien.

De façon connue, un contrôleur aérien opérant le système ATM 2 en fonctionnement opérationnel peut ainsi prendre connaissance, via l'IHM 21, à chaque instant, de la situation aérienne courante ou à venir, en fonction des données externes et/ou en fonction des données internes, y compris les résultats des fonctions évoluées. Ces données et résultats lui sont fournis via l'IHM 21. En fonction de ces éléments, le contrôleur aérien, prend, alors des décisions qu'il fournit au système ATM 2 sous forme d'instructions via l'IHM 21 (sous forme textuelle ou visuelle ou vocale ...).

Ces décisions, comprennent des commandes de fonctions du système ATM 2 (par exemple commandes de zoomer ou de dézoomer sur une zone affichée sur le bloc IHM 21, et/ou des instructions destinées aux aéronefs et/ou aux systèmes ATM de contrôleurs de secteurs adjacents : elles peuvent ainsi comprendre des commandes d'altitude de vol cible, de vitesses (horizontale, verticale) cible, de cap cible, de pente cible de montée ou de descente etc.

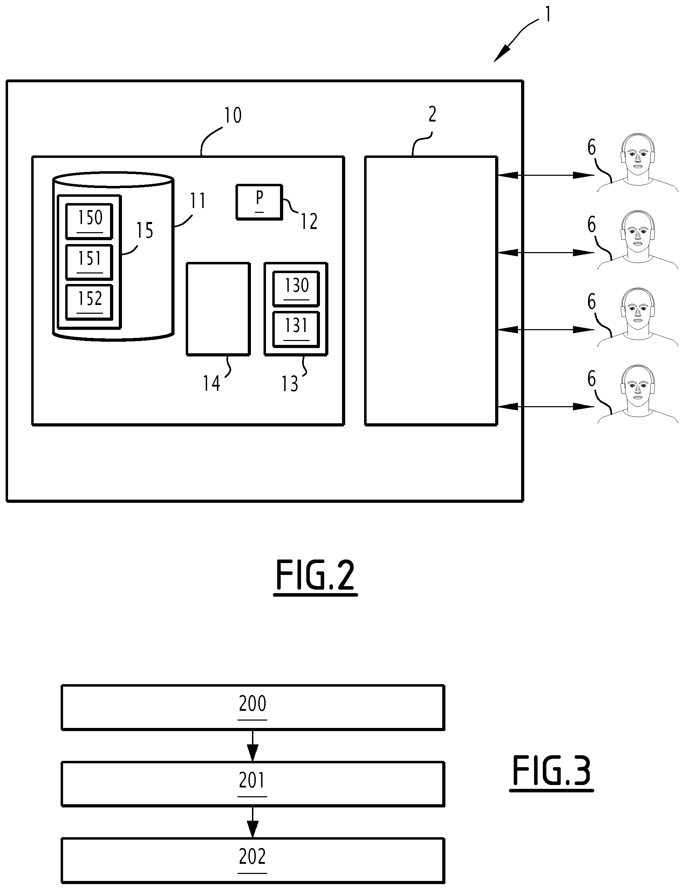

La figure 2 représente une vue d'une plate-forme d'entraînement au contrôle aérien 1 dans un mode de réalisation de l'invention.

Cette plate-forme d'entraînement au contrôle aérien 1 comprend, dans le cas considéré, un système d'entraînement 10 et un système ATM 2 fonctionnant tel que décrit ci-dessus et qui est ici utilisé cette fois, non en service opérationnel classique, mais pour l'entraînement des contrôleurs aériens.

Le système d'entraînement 10 comprend une mémoire 11, un processeur 12, un module de traitement 13 et un bloc électronique de détermination automatique d'instructions 14, dans le cas présent, un réseau de neurones issu d'un apprentissage, comme exposé plus loin.

La mémoire 11 comporte un historique 15 d'ensemble d'éléments. Chaque ensemble d'éléments comporte un élément d'entrée. Chaque élément d'entrée décrit une situation aérienne ayant eu lieu à un instant donné de l'historique et comporte des données externes des systèmes ATM définissant cette situation aérienne, et comporte, dans des modes de réalisation, des données internes de systèmes ATM et/ou des résultats de fonctions mises en oeuvre par des systèmes ATM. Chaque ensemble d'éléments comporte, associé à l'élément d'entrée, un élément de sortie comprenant la ou les instructions fournies au système ATM par les contrôleurs aériens au vu de cet élément d'entrée respectif à l'instant donné.

Cet historique est par exemple constitué à partir de la collecte sur plusieurs mois, depuis le système ATM 2, ou un autre système ATM similaire au système ATM 2 ou depuis plusieurs systèmes ATM opérationnels, de l'ensemble de ces éléments et leur mémorisation.

Le module de traitement 13 comprend un bloc générateur de scénario 130 et un bloc assistant virtuel 131.

Le bloc générateur de scénario 130 est adapté pour sélectionner au moins un ensemble d'éléments, pour déterminer, en fonction du ou des éléments d'entrée de l'ensemble d'éléments sélectionné(s) un scénario d'entraînement, i.e. des données d'entrée d'entraînement comprenant des données d'entrée externes, voire des données d'entrée internes associées et pour les fournir au système ATM 2 et au réseau de neurones 14 de la plate-forme 1.

Le bloc assistant virtuel 131 est adapté pour recueillir une décision fournie au système ATM 2 par le contrôleur en cours d'entrainement et pour recueillir une décision fournie par le réseau de neurones 14, consécutives à la fourniture des mêmes données d'entrée d'entraînement au système ATM 2 et au réseau de neurones 14, pour les comparer, pour déterminer un message en fonction de ladite comparaison.

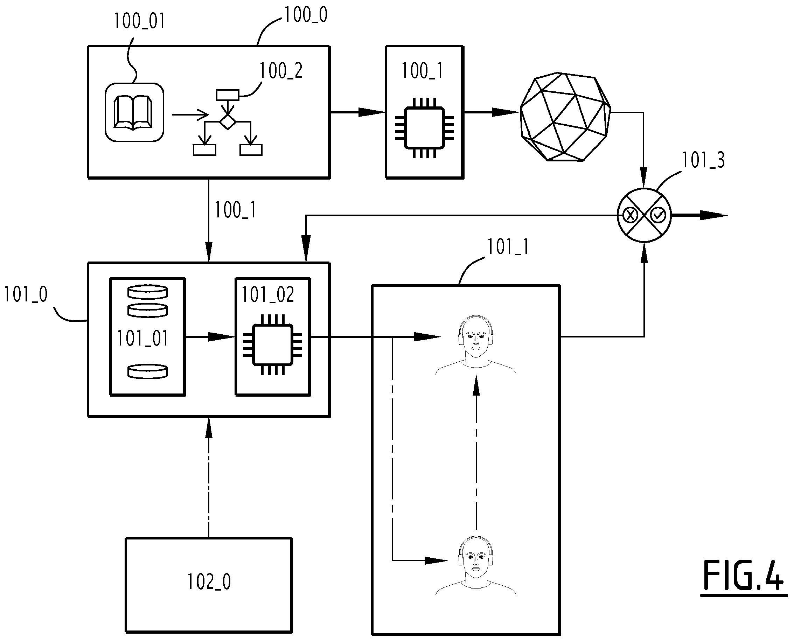

La figure 4 est un organigramme d'étapes mises en oeuvre dans un mode de réalisation de l'invention, pour obtenir le réseau de neurones 14 après apprentissage.

Dans une phase préliminaire 101_0 d'obtention d'un réseau de neurone programmé, il est mis en oeuvre un apprentissage, par le réseau de neurones 14, du comportement de contrôleur(s) aérien(s), à partir d'un historique d'éléments d'entrée comportant des données externes des systèmes ATM, et comportant, dans des modes de réalisation, des données internes des systèmes ATM et/ou des résultats de fonctions, et à partir d'un historique d'éléments de sortie comprenant les décisions fournies aux systèmes ATM par les contrôleurs aériens au vu de ces éléments d'entrée respectifs. Cet historique est par exemple l'historique 15, ou un extrait de l'historique 15.

On notera que cette phase préliminaire 101_0 d'apprentissage du réseau de neurones 14, suivant les modes de réalisation est mise en oeuvre sur la plate-forme 1, ou est mise en oeuvre sur une plate-forme spécifique d'apprentissage de réseau de neurones (non représentée), dotée de ses propres ressources de mémoire et de calcul.

Dans un mode de réalisation, la phase préliminaire 101_0 comprend une phase de préparation 101_01 des éléments d'entrée et de sortie identifiant quels sont (les extraits de) ceux des éléments d'entrée et de sortie utiles à l'apprentissage du réseau de neurones, dans la prise de décision, ainsi par exemple que la durée minimum de l'historique.

De façon connue, la préparation de ces éléments peut comprendre la segmentation des éléments recueillis, la détection d'éléments manquants et d'aberrations, la réduction des dimensions des éléments, l'extraction de groupes, l'identification de causes et relations, et pour finir la définition d'un jeu d'éléments d'apprentissage comprenant des éléments d'apprentissage d'entrée et des éléments de sortie associés. Pour chaque configuration de test, la phase préliminaire 101_0 comprend une phase d'apprentissage 101_02 à proprement parler du réseau de neurones 14 à partir des éléments d'apprentissage d'entrée et de sortie associés du jeu d'éléments d'apprentissage. Un réseau de neurones « appris » est ainsi déterminé.

Ces principes de définition de jeux de données d'apprentissage, et d'utilisation de réseaux de neurones sont bien connus : cf. par exemple :
- Tolk, A. (2015, July). The next generation of modeling & simulation: integrating big data and deep learning. In Proceedings of the Conférence on Summer Computer Simulation (pp. 1-8). Society for Computer Simulation International ;
- Akerkar, R. (2014). Analytics on Big Aviation Data: Turning Data into Insights. IJCSA, 11(3),116-127 ;
- Boci, E., & Thistlethwaite, S. (2015, April). A novel big data architecture in support of ADS-B data analytic. In Integrated Communication, Navigation, and Surveillance Conférence (ICNS), 2015 (pp. C1-1). IEEE ;
- Bengio, Y. (2009). Learning deep architectures for Al. Foundations and trends® in Machine Learning, 2(1), 1-127.

Le résultat de la phase d'apprentissage 101_02 est la délivrance 101_1 d'un réseau de neurones entraîné 14, encore appelé bloc électronique de détermination automatique d'instructions 14.

Tout type de réseaux de neurones artificiels peut être utilisé. Par exemple, un réseau d'apprentissage profond, de l'anglais « deep learning network », un réseau de neurones convolutif CNN, de l'anglais « Convolutional Neural Network » sont utilisés. Le nombre de noeuds d'entrée sera choisi égal au nombre d'éléments d'entrée et le nombre de noeuds de sortie sera choisi égal au nombre d'éléments de sortie pour chaque configuration de test.

Un système ATM 2 évoluant régulièrement, les mises à jour tant fonctionnelles (introduction de nouvelles fonctions ou de fonctions modifiées) que techniques (changements de matériels, de système d'exploitation etc.) sont à prendre en compte dans le modèle 14. Dans une telle situation, dans un mode de réalisation, le réseau de neurones 14 correspondant au système ATM 2 avant mise à jour est complété pour prendre en compte ces mises à jour. Ainsi en référence à la figure 4, dans une étape 102_0, des éléments d'entrée comportant des données externes des systèmes ATM, voire des données internes des systèmes ATM, et comportant des éléments de sortie comprenant les décisions prises par les contrôleurs aériens au vu de ces éléments d'entrée respectifs, sont enregistrés et stockés pendant des sessions de validation réalisées par des contrôleurs aériens sur le système ATM 2. L'étape 101_0 d'obtention d'un réseau de neurones programmé est alors mise en oeuvre sur la base de ces éléments d'entrée et de sortie, et donne lieu à la délivrance d'un modèle de contrôleur de réseau aérien ciblée sur la partie du système ATM 2 qui est mise à jour. Dans l'étape 101_1, une combinaison du modèle algorithmique correspondant au système ATM 2 avant mise à jour et du modèle algorithmique du système ATM 2 ciblé sur les aspects mis à jour est réalisée (par exemple, dans des modes de réalisation, par une concaténation), permettant ainsi de délivrer un modèle algorithmique complet correspondant au système ATM 2 mis à jour.

Par ailleurs, dans un mode de réalisation, dans une étape 100_0 de sécurisation, des règles, principes, contraintes, conditions et interdictions mises en oeuvre par les contrôleurs aériens dans l'application de leur métier (correspondant par exemple aux normes ICAO telles que définies dans le document 4444) sont formalisées sous forme algorithmique.

Par exemple, il figure parmi ces règles que :
- a1/ un contrôleur aérien ne peut pas fournir de commandes concernant des aéronefs en-dehors du secteur dont il est en charge,
- a2/ sauf pour certaines exceptions définies précisément par les conditions Cond1, Cond2, Cond3 ;
- a3/ dans une situation donnée correspondant à une vitesse et une altitude d'aéronef donnée, un changement commandé d'altitude de niveau de vol doit être inférieur à un seuil donné dépendant desdites vitesse et altitudes.

L'algorithme de sécurisation résultant est, dans un mode de réalisation, mis en oeuvre dans une étape 100_1 sur les éléments d'apprentissage d'entrée et de sortie associés du jeu d'éléments d'apprentissage préalablement à la construction d'un modèle de contrôleur aérien, ce qui permet de détecter les éléments non conformes à la pratique normée, et ensuite soit de les supprimer du jeu d'éléments d'apprentissage, soit de les affecter à une classe de « mauvaise pratique » permettant au modèle d'autant mieux apprendre le comportement de contrôleur conforme à une « bonne pratique ».

Dans un mode de réalisation, dans une étape 100_1, ces règles, principes, contraintes, conditions et interdictions mises en oeuvre par les contrôleurs aériens dans l'application de leur métier sont également fournies comme données d'apprentissage à un réseau de neurones artificiels, et, à l'issue de la phase d'apprentissage, un modèle englobant ces règles est délivré, nommé ci-après modèle de sécurisation.

Dans une étape 101_3, chaque décision ensuite prise par le modèle de contrôleur 14 pendant un processus d'apprentissage tel qu'illustré en figure 3 est fournie à ce modèle de sécurisation, qui soit valide la décision comme conforme à la bonne pratique (notamment valide qu'elle se trouve dans la gamme dynamique acceptable pour les décisions de sortie), soit invalide la décision qui n'est alors pas prise en compte dans le cadre des tests et vient par exemple alors enrichir la classe de « mauvaise pratique », ce qui a pour effet de renforcer le modèle de contrôleur aérien.

Dans un mode de réalisation de l'invention, les étapes, représentées en figure 3, de mise en oeuvre d'un entraînement d'un contrôleur aérien à l'aide de la phase forme d'apprentissage 1 sont mises en oeuvre.

Dans une étape préliminaire de choix de scénario d'apprentissage 200, le bloc générateur de scénario 130 sélectionne au moins un élément d'entrée de l'ensemble d'éléments et détermine, en fonction du ou des éléments sélectionnés, un scénario d'apprentissage, i.e. des données d'entrée d'apprentissage comprenant des données d'entrée externes, voire des données d'entrée internes et il les fournit au système ATM 2 de la plate-forme 1 et au réseau de neurones 14 de la plate-forme 1.

Cette sélection peut prendre plusieurs formes. Par exemple, le choix peut être aléatoire, ou être croissant ou décroissant en fonction de l'instant correspondant à la survenue de la situation aérienne décrire par l'élément d'entrée.

Dans un mode de réalisation, un formateur fournit un mot-clef au système d'apprentissage 10, via un bloc d'interface homme-machine (non représenté) du système 10. Le mot-clef définit par exemple un thème d'entraînement souhaité, tel que « conflit entre avions », « fort trafic » », etc. Le bloc générateur de scénario 130 est adapté pour identifier les ensembles d'éléments dont les éléments d'entrée et/ou les éléments de sortie correspondent audit mot-clef et pour sélectionner le ou les éléments d'entrée de ces ensembles d'éléments identifiés.

Dans une étape 201 de détermination du scénario d'entraînement, le bloc générateur de scénario 130 détermine un scénario d'entraînement en fonction d'au moins l'élément d'entrée sélectionné.

Par exemple, lorsque plusieurs éléments d'entrée ont été sélectionnés, chacun est traité indépendamment, comme une partie du scénario, ou un seul est finalement retenu, suite à désignation par le formateur parmi l'ensemble des éléments d'entrée retenus ou à une sélection par le bloc générateur de scénario 130 en fonction de critères prédéfinis ; ou encore une combinaison de plusieurs éléments d'entrée est effectuée par le bloc générateur de scénario 130 pour obtenir un seul élément d'entrée (par moyennage, interpolation, ...).

Puis, par exemple, chaque élément d'entrée sélectionné est traité par le générateur de scénario 130. Par exemple, une étape d'extraction est mise en oeuvre où seuls certains des paramètres de l'élément d'entrée, notamment en rapport avec le thème de sélection le cas échéant, sont conservés.

Une étape de conversion est mise en oeuvre par exemple, afin de mettre le format des données en conformité avec les formats acceptés par le système ATM 2. Les données d'entrée d'apprentissage ainsi traitées (sous forme par exemple de vecteurs de données comprenant dans un cas la position d'un avion, sa vitesse, sa direction, la météo, les messages envoyés par les autres secteurs...) sont alors fournies en tant que scénario d'apprentissage au système ATM 2 de la plate-forme 1 et au réseau de neurones 14 de la plate-forme 1.

Dans une étape 202 d'entraînement d'un contrôleur aérien sur la plate-forme 1, le système ATM 2 reçoit les données d'entrée d'apprentissage fournies par le générateur de scénario 130. Elles sont éventuellement traitées, puis les données internes reçues, éventuellement traitées, sont restituées via l'IHM 21, au contrôleur aérien en formation.

Le réseau de neurones 14 détermine automatiquement, en fonction des données d'entrée d'apprentissage, les données de sortie correspondante, i.e. une ou des instructions destinées à l'ATM 2 et les fournit au module de traitement 13. Ces instructions représentent le fruit de l'expérience de contrôleurs aériens mutualisée au sein du réseau de neurones 14.

Dans un mode de réalisation, le bloc assistant virtuel 131 est adapté pour déterminer, en fonction des données de sortie fournie par le réseau de neurones 14, un contenu destiné à guider le contrôleur aérien pour qu'il détermine ces données de sortie. Ce contenu comprend par exemple des conseils sur les points des données d'entrée d'apprentissage sur lesquels porter son attention, ou propose un choix de plusieurs lots d'instructions alternatives parmi lesquels figure le lot d'instructions fourni par le réseau de neurones. Dans un tel cas, le bloc assistant virtuel 131 commande ensuite que le contenu soit restitué au contrôleur aérien, par exemple par affichage sur un écran de l'IHM 21, ou tout autre écran dont serait dotée la plate-forme 1 et visible par le contrôleur aérien.

Le contrôleur aérien s'entraînant sur la plate-forme 1, au vu des données internes d'apprentissage qui lui sont délivrées via l'IHM 21, complétées le cas échéant d'un contenu supplémentaire issu du bloc assistant virtuel 131, prend alors une décision et la fournit en tant qu'instruction(s) au système ATM 2 via le bloc IHM 21 : par exemple, en cas de thème d'entraînement relatif à des conflits entre avions, des commandes de changement de niveau de vol pour au moins un aéronef.

Le système ATM 2 de la plate-forme 1 transmet alors cette(s) instruction(s) au bloc de traitement 13.

Le bloc assistant virtuel 131 compare alors entre l'instruction fournie par le système ATM et provenant du contrôleur aérien et celle fournie par le réseau de neurones 14 (ou les instructions entre les lorsqu'il y en a plusieurs), puis il détermine le contenu du message en fonction de cette comparaison.

Ce message indique par exemple si l'instruction fournie par le contrôleur aérien est juste (si elle correspond à celle fournie par le réseau de neurones 14) ou erronée, et le bloc assistant virtuel commande alors l'affichage de ce message sur la plate-forme 1 à destination du contrôleur aérien. Dans le cas où la réponse est erronée, le message peut en outre comporter des informations complémentaires pour guider le comportement du contrôleur vers l'instruction à déterminer.

Le bloc assistant virtuel 131, dans un mode de réalisation, effectue à la fin de l'entraînement du contrôleur aérien, un récapitulatif des « bonnes instructions » fournies par le contrôleur aérien et par exemple calcule son score d'entraînement.

Une plate-forme d'entraînement selon l'invention telle que la plate-forme 1 contribue à un entraînement ciblé et évolutif des contrôleurs aériens, bénéficiant de la capitalisation et la mutualisation de l'historique considéré.

Dans le mode de réalisation considéré, le réseau de neurones 14 et le module de traitement 13 sont réalisés sous forme d'algorithmes comprenant des instructions logicielles mémorisées dans la mémoire 11 et s'exécutant sur le processeur 12. Lorsqu'elles sont exécutées, ces instructions donnent lieu à la mise en oeuvre des étapes décrites ci-dessus comme incombant au réseau de neurones 14, respectivement au module de traitement 13.

Dans un autre mode de réalisation, le module de traitement 13 est réalisé sous forme d'un composant logique programmable, tel qu'un FPGA (de l'anglais *Field Programmable Gate Array*), ou encore sous forme d'un circuit intégré dédié, tel qu'un ASIC (de l'anglais *Applications Specific Integrated Circuit*), et/ou le réseau de neurones 14 est réalisé sous forme d'un composant logique programmable, tel qu'une carte GPU (de l'anglais *Graphics Processing Unit*) ou multi-GPU.

L'invention a été décrite ci-dessus dans une application au domaine de l'entraînement. Elle a également des applications dans le domaine de l'assistance aux contrôleurs aériens en service opérationnel.

Dans une telle application, le système ATM 2 tel que représenté sur la figure 2 est complété par un système d'assistance similaire au système d'entraînement 10, si ce n'est qu'il ne comporte pas d'historique 15 dans sa mémoire. Ce système d'assistance comporte une mémoire, un processeur, un bloc de détermination automatique d'instructions en tout point similaire au bloc 14 et, à la place du module de traitement 13, un module de traitement, appelé ci-après module d'assistance. Le module d'assistance est adapté pour collecter les données d'entrée courantes du système ATM 2, pour les fournir en entrée du bloc de détermination automatique d'instructions, pour collecter l'instruction délivrée en sortie par ce bloc de détermination automatique d'instructions sur la base des données d'entrée courantes et pour en commander la fourniture au contrôleur aérien opérant le système ATM 2, par exemple par affichage sur un écran d'affichage du système ATM 2 ou sur un écran complémentaire, visible par le contrôleur aérien. Ainsi quand le contrôleur aérien prend connaissance de l'état du trafic aérien correspondant aux données d'entrée courantes telles que restituées sur l'IHM 21, il dispose en outre de la ou des instructions déterminées comme découlant de la pratique apprise par le réseau de neurones du bloc de détermination automatique d'instructions et est en mesure de prendre sa propre décision quant à l'instruction à saisir sur l'IHM 21 en bénéficiant de cette expertise supplémentaire.

Les étapes sont alors les suivantes, en phase opérationnelle :
Le système ATM 2 de la figure 1 reçoit des données d'entrée externes, génère des données d'entrée internes. Il les stocke dans sa mémoire 20 et les fournit, éventuellement après certains traitements additionnels au contrôleur aérien via l'IHM 21.

En parallèle, le module collecte les données d'entrée courantes du système ATM 2, les fournit en entrée du bloc de détermination automatique d'instructions, obtient l'instruction délivrée en sortie par ce dernier et en commande la fourniture au contrôleur aérien opérant le système ATM 2, par exemple par affichage sur un écran d'affichage du système ATM 2 ou sur un écran complémentaire, visible par le contrôleur aérien. Le contrôleur aérien prend connaissance de l'état du trafic aérien correspondant aux données d'entrée courantes telles que restituées sur l'IHM 21, et dispose en outre de la ou des instructions déterminées comme découlant de la pratique apprise par le réseau de neurones du bloc de détermination automatique d'instructions. Il prendre sa propre décision quant à l'instruction en bénéficiant de cette expertise supplémentaire et la saisit sur l'IHM 21. Le système ATM 2 traite alors cette instruction, en effectuant la fonction du système si une telle fonction est commandée dans l'instruction, ou en transmettant l'instruction par télécommunication, à un aéronef ou au système ATM d'un autre secteur concerné.

## Revendications

1. Plate-forme (1) d'entraînement et/ou d'assistance au contrôle aérien via un système (2) électronique de contrôle du trafic aérien adapté pour être opéré par un contrôleur aérien, ladite plate-forme d'entraînement comprenant :
- ledit système électronique (2) de contrôle du trafic aérien, adapté pour obtenir des données d'entrée représentatives au moins de l'état d'un trafic aérien, pour délivrer, à destination du contrôleur aérien opérant le système, des informations relatives au trafic aérien et établies en fonction au moins desdites données d'entrée obtenues, pour recevoir depuis un contrôleur aérien, des instructions en fonction desdites informations délivrées et pour traiter lesdites instructions ;
- un bloc (14) de détermination automatique d'instructions en fonction de données d'entrée représentatives d'au moins l'état d'un trafic aérien ;
- un module électronique de traitement (13) adapté pour collecter lesdites données d'entrée obtenues par le système électronique de contrôle de trafic aérien, pour les fournir au bloc (14) de détermination automatique, pour collecter au moins une instruction déterminée automatiquement en fonction desdites données d'entrée fournies et pour commander la délivrance de ladite instruction au contrôleur aérien opérant le système ;
dans laquelle ledit bloc comprend un réseau de neurones issu d'un apprentissage mis en oeuvre par ordinateur, en fonction d'ensembles d'éléments d'un premier historique d'ensembles d'éléments, chaque ensemble d'éléments étant associé à une situation aérienne respective correspondant à un instant respectif parmi une pluralité d'instants respectifs dans l'historique et comprenant au moins des données d'entrée obtenues par un système électronique de contrôle du trafic aérien à l'instant respectif et la ou les instruction(s) de contrôle de trafic aérien reçues reçue(s) par ledit système consécutivement à la délivrance d'informations établies en fonction desdites données d'entrée.

2. Plate-forme (1) d'entraînement et/ou d'assistance selon la revendication 1, comprenant
- une mémoire (11) adaptée pour stocker un second historique (15) d'ensembles d'éléments,
- le module de traitement (13) étant adapté pour extraire des données d'entrée de ladite base de données, pour déterminer, en fonction d'au moins de données d'entrée extraites, des données d'entrée d'entraînement et pour fournir lesdites données d'entraînement au système électronique de contrôle du trafic aérien et au bloc (14) de détermination automatique;
ledit système électronique de contrôle du trafic aérien étant adapté pour délivrer des informations relatives au trafic aérien établies en fonction desdites données d'entrée d'entraînement, pour recevoir depuis un contrôleur aérien en entraînement sur la plate-forme, au moins une instruction de contrôle de trafic aérien établie en fonction desdites informations délivrées et pour la fournir au module de traitement,
ledit module de traitement (13) étant adapté pour comparer ladite instruction reçue avec l'instruction déterminée automatiquement collectée et pour déterminer un message en fonction de ladite comparaison, ladite plate-forme étant adaptée pour afficher le message.

3. Plate-forme (1) d'entraînement et/ou d'assistance selon la revendication 1 ou 2, dans laquelle le module de traitement (13) est adapté pour déterminer, en fonction de l'instruction déterminée automatiquement par le modèle algorithmique, un message destiné à guider le contrôleur aérien en entraînement vers ladite instruction, la plate-forme étant adaptée pour afficher ledit message.

4. Plate-forme (1) d'entraînement et/ou d'assistance selon la revendication 2 ou 3 dans lequel le module de traitement (13) est adapté pour recevoir des informations indiquant un thème d'entraînement et pour extraire les données d'entrée en fonction desdites informations.

5. Procédé d'entraînement et/ou d'assistance au contrôle aérien par un système (2) électronique de contrôle du trafic aérien adapté pour obtenir des données d'entrée représentatives au moins de l'état d'un trafic aérien, pour délivrer, à destination du contrôleur aérien opérant le système, des informations relatives au trafic aérien et établies en fonction au moins desdites données d'entrée obtenues, pour recevoir depuis un contrôleur aérien, des instructions en fonction desdites informations délivrées et pour traiter lesdites instructions, ledit procédé étant mis en oeuvre sur une plate-forme d'entraînement et/ou d'assistance (1) comprenant :
- ledit système électronique (2) ;
- un bloc (14) de détermination automatique d'instructions en fonction de données d'entrée représentatives d'au moins l'état d'un trafic aérien issu, ledit bloc comprenant un réseau de neurones issu d'un apprentissage mis en oeuvre par ordinateur, en fonction d'ensembles d'éléments d'un premier historique d'ensembles d'éléments, chaque ensemble d'éléments étant associé à une situation aérienne respective correspondant à un instant respectif parmi une pluralité d'instants respectifs dans l'historique et comprenant au moins des données d'entrée obtenues par un système électronique de contrôle du trafic aérien à l'instant respectif et la ou les instruction(s) de contrôle de trafic aérien reçue(s) par ledit système consécutivement à la délivrance d'informations établies en fonction desdites données d'entrée ;
- un module électronique de traitement (13) ;
ledit procédé comprenant les étapes consistant à :
- obtention de données d'entrée par le système électronique de contrôle de trafic aérien ;
- par le module de traitement (13) : collecte desdites données d'entrée et fourniture desdites données d'entrée collectées au bloc (14) de détermination automatique ;
- détermination automatique par ledit bloc (14) de détermination automatique en fonction desdites données d'entrée fournies d'au moins une instruction ;
- commande par le module de traitement de la délivrance de ladite instruction au contrôleur aérien opérant le système.

6. Procédé d'entraînement et/ou d'assistance selon la revendication 5, la plate-forme (1) comprenant une mémoire (11) adaptée pour stocker un second historique (15) d'ensembles d'éléments, ledit procédé comprenant les étapes de :
- par le module de traitement (13) : extraction des donnée d'entrée de ladite base de données, détermination, en fonction d'au moins les données d'entrée extraites, des données d'entrée d'entraînement et fourniture desdites données d'entraînement au système électronique de contrôle du trafic aérien et au bloc (14) de détermination automatique ;
- par ledit système électronique de contrôle du trafic aérien : délivrance des informations relatives au trafic aérien établies en fonction desdites données d'entrée d'entraînement, réception depuis un contrôleur aérien en entraînement sur la plate-forme, d'au moins une instruction de contrôle de trafic aérien établie en fonction desdites informations délivrées et fourniture au module de traitement ;
- comparaison par le module de traitement (13) de ladite instruction reçue avec l'instruction déterminée automatiquement collectée et détermination d'un message en fonction de ladite comparaison ;
- affichage par ladite plate-forme du message.

7. Procédé d'entraînement et/ou d'assistance selon la revendication 5 ou 6, comprenant la détermination par le module de traitement (13), en fonction de l'instruction déterminée automatiquement par le modèle algorithmique, d'un message destiné à guider le contrôleur aérien en entraînement vers ladite instruction, et l'affichage du message par la plate-forme.

8. Procédé d'entraînement et/ou d'assistance selon la revendication 6 ou 7, comprenant les étapes, réalisées par le module de traitement (13), de :
- réception d'informations indiquant un thème d'entraînement et
- extraction des données d'entrée en fonction desdites informations.
